# EUROPÄISCHE PATENTANMELDUNG

(11) **EP 3 928 737 A1**
(43) Veröffentlichungstag der Anmeldung: **29.12.2021**
(21) Anmeldenummer: 20181571.9
(22) Anmeldetag: 23.06.2020
(51) Int. Cl.: A61C 8/00

(54) **VOLLKERAMISCHES DENTALIMPLANTAT**

(71) Anmelder: bredent medical GmbH & Co. KG, 89250 Senden (DE)
(72) Erfinder: OBERMAIR, Gernot, 39100 Bozen (IT)
(74) Vertreter: Baur & Weber Patentanwälte PartG mbB

(57) **Zusammenfassung**

Es wird ein vollkeramisches Dentalimplantat (2), insbesondere aus Zirkondioxid, beschrieben, welches einteilig ausgebildet ist, in einem sich zum unteren Ende (4) hin verjüngenden Bereich (6) zum Einsetzen in einen Kieferknochen geeignete Strukturelemente (10) und an seiner Oberseite (14) einen kegelstumpfförmigen Außenkonus (16) aufweist, der von seiner Deckfläche (18) ausgehend mit einem den Außenkonus (16) wenigstens teilweise durchdringendem Innengewinde (20) versehen ist, um mittels einer in das Innengewinde (20) eingefügten Schraube (42) eine lösbare Befestigung eines zahnprothetischen Aufbaus (34) auf einem zum Außenkonus (16) korrespondieren Innenkonus (36) zu schaffen.

## Beschreibung

Die Erfindung betrifft ein vollkeramisches Dentalimplantat, insbesondere ein vollkeramisches Dentalimplantat aus einer Zirkondioxidkeramik.

Keramische Implantate, beispielsweise aus einer Zirkonkeramik, sind aus dem Stand der Technik bekannt. Allerdings ist die Verwendung derartiger Implantate noch mit Schwierigkeiten verbunden, so dass dieser Implantattyp bisher noch keine große Akzeptanz gefunden hat. Die zu erwartenden Vorteile wären jedoch beachtlich. Viele Patienten reagieren auf Titanpartikel, wobei in Tests bei zirka 30 % der Patienten eine überschießende Immunreaktion beobachtet werden konnte. Demnach wären keramische Implantate eine Alternative zur Vermeidung des Risikos einer Nichteinheilung. Ebenso könnten langfristig Periimplantitis und Mukositis mit den dazu gehörenden chronischen Entzündungen und Belastungen des Organismus vermieden werden. Folglich steigt der Anteil an Patienten, welche metallfrei oder nahezu metallfreie Versorgungen wünschen. Darüber hinaus bieten keramische Implantate auch ästhetische Vorteile, die insbesondere im Frontzahnbereich wichtig sind, da metallische Implantate aufgrund ihrer Farbe durch die Gingiva hindurch von außen sichtbar sind, was häufig bei einer vorliegenden Parodontitis, welche ursächlich für den Zahnverlust war, durch den damit einher gehenden Zahnfleischverlust noch verstärkt wird.

Aus dem Stand der Technik sind mehrere Lösungen dieser Problematik bekannt.

So ist aus der EP 2 436 336 A1 ein Dentalimplantatsystem bekannt, das ein Dentalimplantat, ein Dentalrestaurationsteil, einen Konnektor mit einer zentralen Durchgangsbohrung sowie einen umlaufenden, radial abragenden Bund und einer die Durchgangsbohrung durchsetzenden Schraube, mit der zumindest der Konnektor fest mit dem Dentalimplantat verbindbar ist. Der Bund weist eine mit dem Dentalimplantat zusammenwirkende, erste Anschlagfläche und eine mit einem Abutment oder einem Dentalrestaurationsteil zusammenwirkende, zweite Anschlagfläche auf. Die Farbe des Bundes, insbesondere die Farbe des Konnektors, entspricht wenigstens einer Zahnfarbe oder einer Zahnfleischfarbe. Der Konnektor erstreckt sich zumindest teilweise je in das Dentalimplantat und/oder das Abutment hinein und besteht im Wesentlichen aus dem gleichen Material wie das Abutment oder aus Zirkondioxid.

Aus der DE 101 59 683 A1 ist ein Dentalimplantat mit einem Verankerungsteil zur Verankerung im Knochen und mit einem Aufbauteil zur Aufnahme einer prothetischen Suprakontruktion bekannt, wobei Verankerungsteil und Aufbauteil einstückig aus einem Werkstoff auf Zirkonoxidbasis ausgebildet sind und wobei zumindest das Verankerungsteil an seiner Außenoberfläche zumindest teilweise durch ein substraktives, abragendes Verfahren vorbehandelt ist oder mit einer Beschichtung versehen ist, durch die eine Verknöcherung unterstützt wird.

Aus der DE 10 2012 024 596 A1 ist ein Dentalimplantat bekannt, welches einteilig ausgebildet ist und dessen Außenfläche zur Verankerung im Kieferknochen strukturiert ausgebildet ist. Das Dentalimplantat weist in seinem Inneren eine Gewindehülse auf, in der mittels einer Schraube eine Überkonstruktion befestigbar ist. Außerdem ist das Implantat an seinem okklusalen Ende mit einem konischen Verankerungsbereich zur Aufnahme einer konfektionierten Konuskappe versehen.

Ausgehend von diesem Stand der Technik hat sich der Erfinder nun die Aufgabe gestellt, ein vollkeramisches Dentalimplantat zu schaffen, das insbesondere ohne Zwischenteile, wie Abutments oder dergleichen, eine Befestigung einer Suprakonstruktion ermöglicht.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein vollkeramisches Dentalimplantat, insbesondere aus Zirkondioxid, angegeben, welches einteilig ausgebildet ist, in einem sich zum unteren Ende hin verjüngenden Bereich zum Einsetzen in einen Kieferknochen geeignete Strukturelemente und an seiner Oberseite einen kegelstumpfförmigen Außenkonus aufweist, der von seiner Deckfläche ausgehend mit einem den Außenkonus wenigstens teilweise durchdringendem Innengewinde versehen ist, um mittels einer in das Innengewinde eingefügten Schraube eine lösbare Befestigung eines zahnprothetischen Aufbaus auf einem zum Außenkonus korrespondieren Innenkonus zu schaffen.

Demnach wird ein Dentalimplantat geschaffen, bei dem neben den bekannten ästhetischen Vorteilen, die insbesondere im Frontzahnbereich hervortreten, auch eine langfristige Gesunderhaltung des Weichgewebes ermöglicht wird, da insbesondere aus Zirkondioxid bestehende vollkeramische Implantate ein hohe Bioverträglichkeit aufweisen, so dass Periimplantitis bei diesem Implantattyp weitestgehend vermieden werden kann. Desweiteren wird aufgrund der einteiligen Ausführung kein Spalt im subgingivalen Bereich auftreten, was eine Infiltration von Keimen in das Weichgewebe und umgekehrt in das Innere des Implantats unmöglich macht. Aufgrund der einteiligen Ausführung des vollkeramischen Dentalimplantats ergibt sich eine größere Stabilität sowie eine Verminderung der Bruchgefahr, da insbesondere im Vergleich zu einem zweiteiligen Implantat dickere Wandstärken realisierbar sind, wobei darüber hinaus durch die Vermeidung eines Abutments auch eine Kostenreduktion auftritt. Mittels des an der Oberseite angeordneten Außenkonus und des von der Deckfläche ausgehenden Innengewindes wird eine lösbare Verbindung zu einem zahnprothetischen Aufbau geschaffen. Der zahnprothetische Aufbau (oftmals auch Suprastruktur oder Suprakonstruktion genannt) kann eine Krone oder eine Brücke bzw. Vollprothese sein. Das erfindungsgemäße Dentalimplantat eignet sich zur Sofortversorgung, indem der zahnprothetische Aufbau (Suprakonstruktion) mittels Verschraubens befestigt wird. Sofern keine Sofortversorgung gewünscht oder möglich ist, ragt das erfindungsgemäße Dentalimplantat nur geringfügig in den Mundraum, was zu geringen Belastungen führt, da weniger Kraftübertragung auf den Kieferknochen beim Kauen oder mit der Zunge oder der Wange während des Einheilens übertragen wird. Ebenso benötigt das erfindungsgemäße Dentalimplantat kein Verkleben oder Zementieren, was die weitere Behandlung deutlich vereinfacht, insbesondere beim Übergang von einer provisorischen Versorgung auf eine dauerhafte Versorgung. Entzündungen durch überschießenden Zement ins periimplantäre Weichgewebe werden dadurch verhindert, was eine "Zementitis" mit daraus möglicher Periimplantitis und in ultimo Implantatverlust verhindert.

Gemäß einer Ausführungsform der Erfindung ist das Innengewinde als Rundgewinde ausgebildet. Dabei kann ein Übergang zwischen der Oberseite und Gewindegang des Innengewindes mit einer Rundung ausgeführt sein.

Eine derartige Vorgehensweise vermeidet bei der okklusalen Verschraubung des zahnprothetischen Aufbaus dort eventuell auftretende Mikrorisse, da keine sprunghafte Variation der Kraftübertragung bei der okklusalen Verschraubung des zahnprothetischen Aufbaus auftreten kann. Zur sicheren Befestigung kann dabei das Innengewinde so ausgeführt sein, dass beispielsweise ein Anzugsdrehmoment bis 20 Ncm möglich ist. Typischerweise kann das Innengewinde einen Durchmesser von etwa 2 mm aufweisen, wodurch eine stabile Fixierung des zahnprothetischen Aufbaus möglich ist. Ein zusätzliches Verkleben oder Zementieren ist nicht erforderlich, was insbesondere das Abschrauben und wieder Anschrauben für Nachuntersuchungen oder Reparaturen ermöglicht. Bei definitiv zementierten Suprastrukturen ist dies nicht möglich.

Gemäß einer weiteren Ausführungsform der Erfindung ist der Außenkonus an seiner Mantelseite mit einer Rotationshemmung versehen, wobei die Rotationshemmung mit wenigstens einer Flanke in der Mantelfläche gebildet sein kann. Dabei können eine oder mehrere Flanken im Wesentlichen parallel zu einer zwischen der Oberseite und dem unteren Ende verlaufenden Längsachse angeordnet sein.

Demnach wird ein Verdrehschutz durch eine seitliche Abflachung am Außenkonus geschaffen, so dass eine Flanke entsteht, die eine ebene Fläche aufweist, welche die kegelstumpfförmige Außenkontur des Außenkonus durchbricht. Ebenso ist es möglich, auch mehrere derartige Flanken vorzusehen. Eine Rotationshemmung ist insbesondere bei einer Einzelzahnversorgung mittels einer Einzelkrone vorteilhaft. Diese Flanken können auch zum Eindrehen des Implantats verwendet werden.

Gemäß einer weiteren Ausführungsform der Erfindung ist das vollkeramische Dentalimplantat so geformt, dass ein Übergang zwischen dem Implantat und des zahnprothetischen Aufbaus wenigstens abschnittsweise oberhalb eines Zahnfleischbereiches zu liegen kommt.

Demnach befindet sich der Übergang zwischen dem Dentalimplantat und dem zahnprothetischen Aufbau nicht innerhalb des Zahnfleischbereiches, so dass aufgrund der paramarginalen Ausführung keine Keimbesiedlung durch Infiltration ins periimplantäre Weichgewebe möglich ist. Idealerweise würde der Übergang zwischen dem Dentalimplantat und dem zahnprothetischen Aufbau genau am Zahnfleischsaum verlaufen. Da dieser jedoch typischerweise nicht vollständig eben verläuft, wird in der Praxis oftmals der überwiegende Teil oberhalb und einige Abschnitte lediglich geringfügig unterhalb des Zahnfleischverlaufs liegen, was im Rahmen der Erfindung mit dem Begriff "wenigstens abschnittsweise oberhalb" beschrieben wird.

Gemäß einer weiteren Ausführungsform der Erfindung ist der Außenkonus rotationssymmetrisch zu der Längsachse gebildet. Dabei kann der Außenkonus so geformt sein, dass Achsdivergenzen bis zu 40° ausgleichbar sind.

Achsdivergenzen bis ca. 40° können mit einer Anschlussgeometrie kompensierbar sein, bei der der Außenkonus einen Winkel von bis zu 20° aufweist. Demnach ist es möglich, auch bei mehreren Implantaten entsprechende Divergenzen zu kompensieren, so dass eine Brücke oder Prothese mit einer gemeinsamen Einschubrichtung versorgt werden kann. Bisher bekannte einteilige Zirkonimplantate waren diesbezüglich in ihren Einsatzmöglichkeiten stark limitiert, da aufgrund der geringen Konuswinkel, die oftmals nur 4° bis 8° betragen, keine gemeinsame Einschubrichtung möglich. Folglich wurden die aus dem Stand der Technik bekannten Zirkonimplantate beschliffen, was jedoch bei vollkeramischen Dentalimplantaten aus Zirkondioxid mit Materialschwächung und dem vermehrten Auftreten von Mikrorissen verbunden ist. Ebenso ist auf stark beschliffenen Pfeilern keine gute Retention durch zementierte Suprastrukturen zu erreichen, was insbesondere beim Abzementieren wiederum zu Schwierigkeiten führt. Im Vergleich zu individuell gefrästen Abutments bei zweiteiligen Implantatsystemen weist die erfindungsgemäße Anschlussgeometrie eine besonders kostengünstige Realisierbarkeit auf. Mit zweiteiligen ImplantatSystemen lassen sich nur minimale Achsdivergenzen ausgleichen, da diese über eine interne Anschlussgeometrie verfügen, die geometrisch nur einen begrenzten Ausgleich zulässt.

Gemäß einer weiteren Ausführungsform der Erfindung ist der Außenkonus anguliert zu der Längsachse gebildet ist.

Alternativ kann jedoch auch bei der Erfindung ein angulierter Aufbau des Au-ßenkonus gewählt werden, so dass die prothetische Ausrichtung der erfindungsgemäßen Dentalimplantate durch Übereinstimmung der Implantatachse anhand der vorgegebenen Knochenanatomie entsprechend auf unterschiedliche Weisen abgestimmt werden kann.

Des Weiteren wird eine zahnprothetische Anordnung mit wenigstens einem Implantat wie oben beschrieben geschaffen, bei der der zahnprothetische Aufbau eine Krone oder eine Brücke ist.

Besonders vorteilhaft erweist sich das erfindungsgemäße Dentalimplantat in Kombination mit einem zahnprothetischen Aufbau, so dass eine zahnprothetische Anordnung geschaffen wird, die beispielsweise eine Krone, eine Brücke oder eine Vollprothese sein kann. Hierbei können an einer oder an mehreren Positionen im Kiefer erfindungsgemäße Dentalimplantate gesetzt sein. Ein vorher fertiggestellter provisorischer zahnprothetischer Aufbau (Suprakonstruktion) kann als Versorgung im Anschluss an den chirurgischen Implantateingriff aufgeschraubt werden, wobei hier keine Klebung, Passivierung oder ähnliches erforderlich ist. Da aus Zirkondioxid gefertigte Dentalimplantate eine weniger aktive Oberfläche aufweisen, ist zum Erreichen einer Primärstabilität das Ausnutzen des gesamten vorhandenen Restknochens im Kiefer notwendig. Durch die okklusale Verschraubung wird ein lösbarer Zahnersatz geschaffen, der von Patienten üblicherweise als provisorischer Ersatz einer abnehmbaren Teilprothese vorgezogen wird. Die erfindungsgemäßen Implantate können auch für große Implantatversorgungen, beispielsweise in Form verschraubter Toronto-Brücken, verwendet werden. Durch die Verschraubung der Suprakonstruktion werden die Implantate miteinander primär verblockt. Dadurch erfolgt eine Verteilung der Kaukräfte und ein Schutz gegen Überlastung bei unterschiedlicher Primärstabilität der Implantate nach Sofortbelastung. Damit ist es auch möglich, primär nicht stabile Implantate sofort im Verbund mit anderen stabilen Implantaten zu versorgen.

Gemäß einer weiteren Ausführungsform der Erfindung ist der zahnprothetische Aufbau aus einem thermoplastischen Kunststoffmaterial, insbesondere aus der Gruppe der Polyetherketone wie PEEK, gefertigt. Dabei kann der zahnprothetische Aufbau mit einem Innenkonus durch die Schraube auf dem Außenkonus des Implantats abdichtend sitzen.

Eine Suprakonstruktion aus thermoplastischem Kunststoffmaterial kann direkt auf das Dentalimplantat aufgeschraubt werden. Hier sind keine Zwischenabutments oder andere Teile nötig, was zur Kostenreduktion bei der Versorgung beiträgt. Neben der Abdichtwirkung des Außenkonus der Dentalimplantate zum Innenkonus des zahnprothetischen Aufbaus bewirkt die minimale Deformation des thermoplastischen Kunststoffs beim Verschrauben eine Klemmwirkung, was auch einen Schutz gegen Lockerungen der verwendeten Okklusalschrauben darstellt.

Gemäß einer weiteren Ausführungsform der Erfindung weist die Schraube ein Rundgewinde auf. Dabei kann die Schraube ohne metallische Anteile, insbesondere aus einem Material aus Kohlenstofffaser, aufgebaut sein.

Als Schraube können sowohl Metallschrauben als auch aus Kohlenstofffasermaterial bestehende Karbonschrauben verwendet werden, sofern eine komplett metallfreie Versorgung gewünscht ist. Das Rundgewinde an der Schraube sowie entsprechend abgerundete Übergänge am Schraubenschaft ermöglichen eine Befestigung, ohne die Gefahr von Mikrorissen befürchten zu müssen.

Des Weiteren wird die Verwendung wenigstens eines Implantats wie oben beschrieben zusammen mit einer Bohrschablone beschrieben. Dies erweist sich bei der Sofortversorgung eines Patienten als vorteilhaft. Die Verwendung zusammen mit der Bohrschablone kann aber auch zu Test- oder Übungszwecken oder bei der Planung der Versorgung eingesetzt werden.

Hier wird eine vollnavigierte und schablonengeführte Behandlung durchgeführt, bei der die statisch navigierte Aufbereitung des Implantatstollens im Knochen und das Eindrehen des Implantats durch die Führungshülsen der Bohrschablone bis zu einer definierten Höhe erfolgt. Dadurch ist es möglich, ohne großflächiges Aufklappen der Weichgewebe ein oder mehrere erfindungsgemäße Dentalimplantate zu setzen, da deren Position in der chirurgischen Bohrschablone bereits eingeplant wurde. In vielen Fällen ist dann ein Setzen der Implantate mit der sogenannten Flaplesstechnik möglich, bei der lediglich eine kleine Zahnfleischöffnung durch Stanzung oder Mikroinzision geschaffen werden muss, so dass das Weichgewebe wesentlich besser geschont wird. Ein vollständiges Abheben des Zahnfleisches vom Knochen ist nicht mehr notwendig. Die prothetische Ausrichtung der Implantate kann in der Planungsphase im Planungsprogramm berücksichtigt werden.

Nachfolgend werden einige Ausführungsbeispiele anhand der Zeichnung näher erläutert. Es zeigen:
- Figur 1: eine perspektivische Seitenansicht einer ersten Ausführungsform eines erfindungsgemäßen vollkeramischen Dentalimplantats,
- Figur 2: eine Schnittansicht der Ausführungsform gemäß Figur 1,
- Figur 3: eine Schnittansicht einer zahnprothetischen Anordnung mit dem vollkeramischen Dentalimplantat gemäß Figur 1, und
- Figur 4: eine perspektivische Seitenansicht einer zweiten Ausführungsform eines erfindungsgemäßen vollkeramischen Dentalimplantats mit abgewinkeltem Aufbaukonus.

In den Figuren sind gleiche oder funktional gleichwirkende Bauteile mit den gleichen Bezugszeichen versehen.

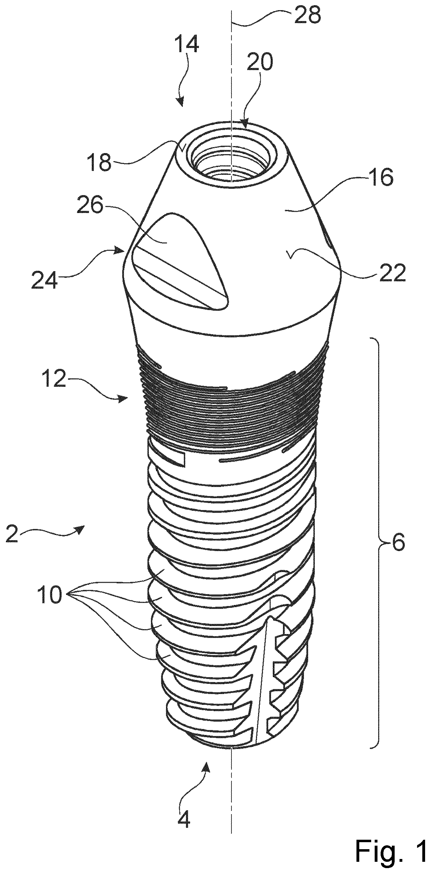

In Figur 1 ist ein vollkeramisches Dentalimplantat 2 in einer perspektivischen Seitenansicht gemäß einer ersten Ausführungsform der Erfindung gezeigt. Das vollkeramische Dentalimplantat 2 ist vollständig aus einem Keramikmaterial, insbesondere Zirkondioxid, hergestellt. Das Dentalimplantat 2 verjüngt sich um unteren Ende 4 hin und weist in diesem sich verjüngenden Bereich 6 Strukturelemente 10 auf, die ein Einsetzen des Implantats 2 in einem Kieferknochen eines Patienten erlauben. Die Strukturelemente 10 können dabei auf bekannte Weise in Form eines Schraubgewindes gebildet sein. Oberhalb der Strukturelemente 10 kann ein Bereich mit einem gewendelten Mikrogewinde 12 vorgesehen sein. Auf der Oberseite 14 ist das Dentalimplantat mit einem kegelstumpfförmigen Außenkonus 16 versehen, der sich unmittelbar an den verjüngenden Bereich 6 anschließt.

Auf der Deckfläche 18 des Außenkonus 16 ist das Dentalimplantat 2 mit einem Innengewinde 20 versehen, das in das Innere des Außenkonus 16 eindringt. Auf seiner Mantelfläche 22 kann der Außenkonus 16 eine Rotationshemmung 24 aufweisen, die beispielsweise in Form einer Flanke 26 gebildet ist, die in die Mantelfläche 22 des Außenkonus 16 einschneidet. Die Flanke 26 kann dabei parallel zu einer Längsachse 28 angeordnet sein. Desweiteren ist es möglich, auch an zusätzlichen Positionen der Mantelfläche 22, beispielsweise gegenüber, eine weitere Rotationshemmung vorzusehen.

Die Mantelfläche 22 des Außenkonus 16 weist hier eine glatte Oberfläche auf, es sind daher insbesondere keine Rille, Vertiefungen oder Vorsprünge auf der Mantelfläche 22 vorgesehen. Die Rotationshemmung 24 in Form der Flanke 26 ist dabei von der Mantelfläche 22 des Außenkonus 16 umschlossen.

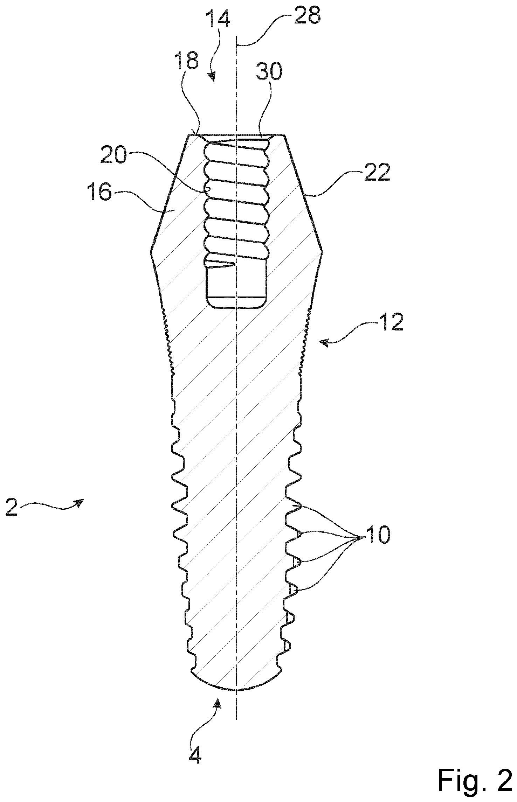

Unter Bezugnahme auf Figur 2 ist das Dentalimplantat 2 aus Figur 1 nochmals in einer Schnittansicht entlang der Längsachse 28 gezeigt. Man erkennt, dass das Innengewinde 20 als Rundgewinde ausgebildet ist und der Bereich zwischen der Oberseite 14 und dem Gewindegang des Innengewindes 20 abgerundet als eine Rundung 30 ausgeführt ist, um die Gefahr von Mikrorissbildung bei der Befestigung eines zahnprothetischen Aufbaus zu minimieren.

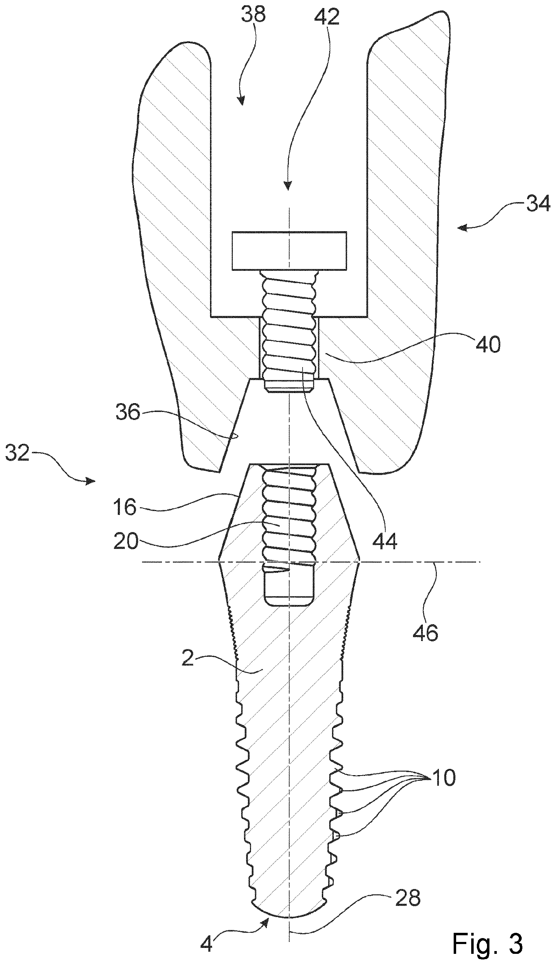

Unter Bezugnahme auf Figur 3 ist das Dentalimplantat aus Figur 2 zusammen mit einem zahnprothetischen Anordnung 32 gezeigt. Die zahnprothetische Anordnung 32 umfasst neben dem Dentalimplantat 2 einen zahnprothetischen Aufbau 34, der in diesem Beispiel als Zahnkrone ausgebildet ist, die beispielsweise aus einem thermoplastischen Kunststoffmaterial wie PEEK hergestellt sein kann. Ein mit dem Außenkonus 16 korrespondierender Innenkonus 36 an dem zahnprothetischen Aufbau 34 ist von einem okklusalen Schraubkanal 38 mittels eines Steges 40 getrennt. In den okklusalen Schraubkanal 38 kann eine Schraube 42 eingeführt werden, die mit ihrem Schraubenschaft 44 in das Innengewinde 20 eingreifen kann. Die Schraube 42 kann als Metallschraube oder auf Basis eines Kohlefasermaterials hergestellt sein. Der Schraubenschaft 44 kann dabei ebenfalls ein Rundgewinde aufweisen.

Nachdem der zahnprothetische Aufbau 34 mittels der Schraube 42 auf dem Implantat 2 befestigt ist, befindet sich der Übergang 46 zwischen dem zahnprothetischen Aufbau 34 und Implantat 2 in etwa an der Position der gestrichelten Linie in Figur 3 mit dem gleichen Bezugszeichen 46. Die Abmessungen des Dentalimplantats 2 sind dabei so gewählt, dass der Übergang 46 knapp oberhalb eines Zahnfleischbereichs oder in Abschnitten oberhalb eines Zahnfleischbereichs zu liegen kommt.

In Figur 3 wurde ein zahnprothetischer Aufbau 34 in Form einer Einzelzahnversorgung mittels einer Zahnkrone näher erläutert. Es versteht sich von selbst, dass das erfindungsgemäße Konzept auch auf eine Brücke erweiterbar ist. Die Rotationshemmung 24 ist jedoch bei der Versorgung eines Einzelzahns vorteilhaft. Durch die korrespondierende Ausgestaltung von Innenkonus 36 und Au-ßenkonus 16 ergibt sich eine Abdichtung zwischen dem zahnprothetischen Aufbau 34 und dem Implantat 2, die durch die Komprimierbarkeit des thermoplastischen Kunststoffmaterials noch weiter verbessert wird. Neben der Abdichtwirkung des Außenkonus 16 des Dentalimplantats 2 zum Innenkonus 36 des zahnprothetischen Aufbaus 34 bewirkt die minimale Deformation des thermoplastischen Kunststoffs beim Verschrauben eine Klemmwirkung, was auch einen Schutz gegen Lockerungen der verwendeten Schraube 42 zur Okklusalverschraubung darstellt. Durch die glatte Ausgestaltung der Mantelfläche 22 wird die Abdichtwirkung zwischen dem Außenkonus 16 des Dentalimplantats 2 und dem Innenkonus 36 des zahnprothetischen Aufbaus 34 verbessert bzw. im Vergleich zu Ausgestaltungen mit einer oder mehreren Rillen überhaupt erst ermöglicht.

In den bisher gezeigten Ausführungsbeispielen gemäß Figur 1 bis 3 ist der Au-ßenkonus rotationssymmetrisch zur Längsachse 28 ausgeführt. Aufgrund des Konuswinkels von bis zu 20° lassen sich Achsdivergenzen bis 40° kompensieren, so dass bei einem mehrteiligen Aufbau dennoch eine gemeinsame Einschubrichtung für eine Brücke oder Prothese geschaffen werden kann.

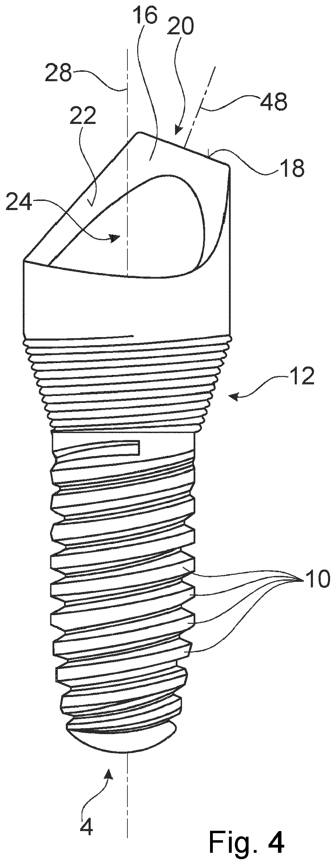

Falls jedoch in bestimmten Anwendungsfällen ein angulierter Aufbau notwendig sein sollte, kann der Außenkonus 16 bezüglich seiner Symmetrieachse 48 auch gegen die Längsachse 28 geneigt sein, wie dies in Figur 4 gezeigt ist. Das Dentalimplantat 2 aus Figur 4 weist ebenfalls eine optionale Rotationshemmung 24 auf, wobei ansonsten bis auf die Angulation keine Unterschiede zu den bisherigen Ausführungsformen bestehen. Das Innengewinde 20 ist entlang der Symmetrieachse 48 ausgerichtet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Dentalimplantat
- 4: unteres Ende
- 6: Bereich
- 10: Strukturelemente
- 12: gewendeltes Mikrogewinde
- 14: Oberseite
- 16: Außenkonus
- 18: Deckfläche
- 20: Innengewinde
- 22: Mantelfläche
- 24: Rotationshemmung
- 26: Flanke
- 28: Längsachse
- 30: Rundung
- 32: zahnprothetische Anordnung
- 34: zahnprothetischer Aufbau (Suprakonstruktion)
- 36: Innenkonus
- 38: Schraubkanal
- 40: Steg
- 42: Schraube
- 44: Schraubenschaft
- 46: Übergang
- 48: Symmetrieachse

## Patentansprüche

1. Vollkeramisches Dentalimplantat (2), insbesondere aus Zirkondioxid, welches einteilig ausgebildet ist, in einem sich zum unteren Ende (4) hin verjüngenden Bereich (6) zum Einsetzen in einen Kieferknochen geeignete Strukturelemente (10) und an seiner Oberseite (14) einen kegelstumpfförmigen Außenkonus (16) aufweist, der von seiner Deckfläche (18) ausgehend mit einem den Außenkonus (16) wenigstens teilweise durchdringendem Innengewinde (20) versehen ist, um mittels einer in das Innengewinde (20) eingefügten Schraube (42) eine lösbare Befestigung eines zahnprothetischen Aufbaus (34) auf einem zum Außenkonus (16) korrespondieren Innenkonus (36) zu schaffen.

2. Vollkeramisches Dentalimplantat nach Anspruch 1, bei dem das Innengewinde (20) als Rundgewinde ausgebildet ist.

3. Vollkeramisches Dentalimplantat nach Anspruch 1 oder 2, bei dem ein Übergang zwischen der Oberseite (14) und einem Gewindegang des Innengewindes (20) mit einer Rundung (30) ausgeführt ist.

4. Vollkeramisches Dentalimplantat nach einem der Ansprüche 1 bis 4, bei dem der Außenkonus (16) an seiner Mantelseite (22) mit einer Rotationshemmung (24) versehen ist, die vorzugsweise mit wenigstens einer Flanke (26) in der Mantelfläche (22) gebildet ist, wobei der oder die Flanken (26) im Wesentlichen parallel zu einer zwischen der Oberseite (14) und dem unteren Ende (4) verlaufenden Längsachse (28) angeordnet sind.

5. Vollkeramisches Dentalimplantat nach einem der Ansprüche 1 bis 4, das so geformt ist, dass ein Übergang (46) zwischen dem Implantat (2) und des zahnprothetischen Aufbaus (34) wenigstens abschnittsweise oberhalb eines Zahnfleischbereiches zu liegen kommt.

6. Vollkeramisches Dentalimplantat nach einem der Ansprüche 1 bis 5, bei dem zwischen den Strukturelementen (10) und dem Außenkonus (16) im sich verjüngenden Bereich (6) eine gewendeltes Mikrogewinde (12) gebildet ist.

7. Vollkeramisches Dentalimplantat nach einem der Ansprüche 1 bis 6, bei dem der Außenkonus (16) rotationssymmetrisch zu der Längsachse (28) gebildet ist.

8. Vollkeramisches Dentalimplantat nach Anspruch 7, bei dem der Außenkonus (16) so geformt ist, dass Achsdivergenzen bis zu 40° ausgleichbar sind.

9. Vollkeramisches Dentalimplantat nach einem der Ansprüche 1 bis 6, bei dem der Außenkonus (16) anguliert zu der Längsachse (28) gebildet ist.

10. Zahnprothetische Anordnung (32) mit wenigstens einem Implantat (2) nach einem der Ansprüche 1 bis 9, bei der der zahnprothetische Aufbau (34) eine Krone oder eine Brücke ist.

11. Zahnprothetische Anordnung nach Anspruch 10, bei der der zahnprothetische Aufbau (34) aus einem thermoplastischen Kunststoffmaterial, insbesondere aus der Gruppe der Polyetherketone wie PEEK, gefertigt ist.

12. Zahnprothetische Anordnung nach Anspruch 10 oder 11, bei der der zahnprothetische Aufbau (34) mit einem Innenkonus (36) versehen ist, der durch die Schraube (42) auf dem Außenkonus (16) des Implantats (2) abdichtend sitzt.

13. Zahnprothetische Anordnung nach einem der Ansprüche 10 bis 12, bei der die Schraube (42) ein Rundgewinde aufweist.

14. Zahnprothetische Anordnung nach einem der Ansprüche 10 bis 12, bei der die Schraube (42) ohne metallische Anteile, insbesondere aus einem Material aus Kohlenstofffaser, aufgebaut ist.

15. Verwendung wenigstens eines Implantats (2) nach einem der Ansprüche 1 bis 9 zusammen mit einer Bohrschablone, insbesondere bei der Sofortversorgung.
